# EUROPEAN PATENT SPECIFICATION

(11) **EP 3 841 753 B1**
(45) Date of publication and mention of the grant of the patent: **24.07.2024**
(21) Application number: 19758849.4
(22) Date of filing: 26.07.2019
(51) Int. Cl.: H04N 21/262, H04N 21/2743, H04N 21/63, H04N 21/633, H04N 21/647, H04N 21/845

(54) **METHOD AND SYSTEM FOR NETWORK CONTROLLED MEDIA UPLOAD OF STORED CONTENT**
VERFAHREN UND SYSTEM FÜR NETZWERKGESTEUERTES MEDIENHOCHLADEN VON GESPEICHERTEN INHALTEN
PROCÉDÉ ET SYSTÈME DE TÉLÉCHARGEMENT DE CONTENU MULTIMÉDIA COMMANDÉ PAR RÉSEAU DE CONTENU MÉMORISÉ

(30) Priority: 20.08.2018 SE 1830243
(43) Date of publication of application: 30.06.2021
(73) Proprietor: Sony Group Corporation, Tokyo 108-0075 (JP)
(72) Inventor: LJUNG, Rickard, 221 88 Lund (SE); LÖNNBLAD, Daniel, 221 88 Lund (SE); ISBERG, Peter, 221 88 Lund (SE)
(74) Representative: Aera A/S
(86) International application number: PCT/US2019/043780
(87) International publication number: WO 2020/040938

(56) References cited:
- ERICSSON LM: "New Workflow: Drone Mounted Cameras", vol. SA WG4, no. Rome, Italy; 20180709 - 20180713, 6 July 2018 (2018-07-06), XP051470521, Retrieved from the Internet <URL:http://www.3gpp.org/ftp/Meetings%5F3GPP%5FSYNC/SA4/Docs> [retrieved on 20180706]
- "3rd Generation Partnership Project; Technical Specification Group Services and System Aspects; Guidelines on the Framework for Live Uplink Streaming (FLUS); (Release 15)", 3GPP STANDARD; TECHNICAL REPORT; 3GPP TR 26.939, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG4, no. V15.0.0, 22 June 2018 (2018-06-22), pages 1 - 29, XP051473314
- QUALCOMM INCORPORATED: "Upload Strategies in E-FLUS", vol. SA WG4, no. Rome, Italy; 20180709 - 20180713, 3 July 2018 (2018-07-03), XP051542535, Retrieved from the Internet <URL:http://www.3gpp.org/ftp/tsg%5Fsa/WG4%5FCODEC/TSGS4%5F99/Docs/S4%2D180700%2Ezip> [retrieved on 20180703]
- SONY MOBILE COMMUNICATIONS ET AL: "E-FLUS: Network Assistance", vol. SA WG4, no. Rome, Italy; 20180709 - 20180713, 6 July 2018 (2018-07-06), XP051470473, Retrieved from the Internet <URL:http://www.3gpp.org/ftp/Meetings%5F3GPP%5FSYNC/SA4/Docs> [retrieved on 20180706]

## Description

### TECHNICAL FIELD OF THE INVENTION

The technology of the present disclosure relates generally to wireless communications among electronic devices in a network environment and, more particularly, to methods of controlling media upload of stored content pertaining to an event having multiple uplink streams, and related devices.

### BACKGROUND

In a network, such as a cellular or mobile network, a client device may stream media content to a media production entity. For instance, a professional video camera or a portable electronic device used to cover a live sporting, music, or news event may provide an audiovisual stream in an uplink transmission. Other devices also may live stream audiovisual content to a network, such as a wireless handheld device in the form of a smart phone, a tablet computer or similar device.

In these examples, the client device, as the source of the media stream, is conventionally configured to transmit data with the highest bit rate that the client can generate. Various problems arise with such an uplink media stream in situations where multiple client devices are streaming media content intended for a collaborative media production. One problem is that the network node adapting the streaming will assume that the streaming media content is only coming from the individual client, so each individual streaming link should be optimized individually.

There exists a need to further improve streaming in situations where multiple clients are streaming data in a collaborative manner. Document "New Workflow: Drone Mounted Cameras" by ERICSSON LM in the 3GPP DRAFT; S4-180770_CR EFLUS_NEW_WORKFLOW, 3RD GENERATION PARTNERSHIP PROJECT (3GPP); and published on 6 July 2018 discloses an example workflow for a drone mounted camera using the Framework for Live Uplink Streaming (FLUS).

### SUMMARY

Disclosed are features that may enhance the quality of experience (QoE) of uplink media streaming services in situations where multiple client devices are streaming content intended for a collaborative production. The disclosed features may improve the final combined media production and QoE specifically when operating on a network where spectrum resources are shared among multiple users, for example in a wireless mobile or cellular network according to any appropriate set of standards such as those promulgated by 3GPP.

The invention is defined by the appended claims.

### BRIEF DESCRIPTION OF THE DRAWINGS

FIG. 1 is a schematic block diagram of a representative network system that conducts network assistance for uplink media transmission for a collaborative media production.
FIG. 2 is a representative high-level architectural diagram of network assistance for uplink media transmission for a collaborative media production.
FIG. 3 is a schematic view of a representative embodiment of a network system that conducts network assistance for uplink media transmission for a collaborative media production.
FIG. 4 is a schematic view of another representative embodiment of a network system that conducts network assistance for uplink media transmission for a collaborative media production.
FIG. 5 is a schematic view of another representative embodiment of a network system that conducts network assistance for uplink media transmission for a collaborative media production.
FIG. 6 is a diagram representing two representative uplink data streams made up of a plurality of data segments.
FIG. 7 is a signaling diagram of a representative method of network assisted media upload of stored content.
FIG. 8 is a flow diagram of a representative method of providing data from an electronic device to a media production service.
FIG. 9 is a flow diagram of a representative method of providing event-coordinated uplink network assistance by a network assistance service to a plurality of electronic devices.
FIG. 10 is a flow diagram of a representative method of producing a combined media production.

### DETAILED DESCRIPTION OF EMBODIMENTS

### A. Introduction

Embodiments will now be described with reference to the drawings, wherein like reference numerals are used to refer to like elements throughout. It will be understood that the figures are not necessarily to scale. Features that are described and/or illustrated with respect to one embodiment may be used in the same way or in a similar way in one or more other embodiments and/or in combination with or instead of the features of the other embodiments.

Described below, in conjunction with the appended figures, are various embodiments of systems and methods for conducting wireless radio communications that include event-coordinated network assistance for uplink streaming. The event-coordinated network assistance for uplink streaming may be carried out in an automated manner by the respective services on the network. The event-coordinated network assistance for uplink streaming may improve uplink streaming performance.

### B. System Architecture

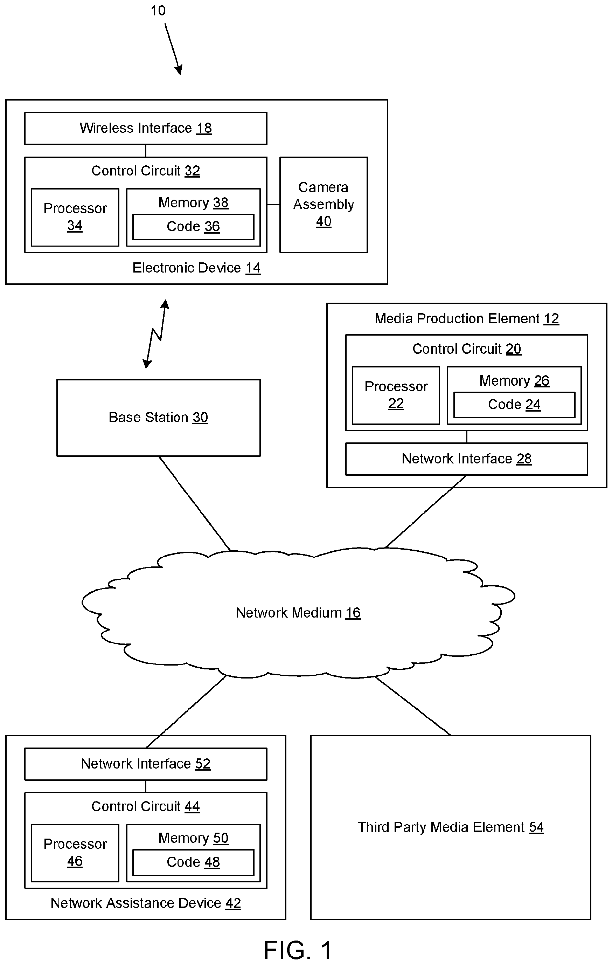

FIG. 1 is a schematic diagram of an exemplary network system 10 for implementing the disclosed techniques. It will be appreciated that the illustrated system is representative and other systems may be used to implement the disclosed techniques. The exemplary network system 10 includes a media production element 12 for data streamed by an uplink from an electronic device 14. The media production element 12 typically will be a server, a component of a server, or other device located in and/or managed by a core network of a wireless mobile or cellular network operator. Clients for the received media stream also may be reachable via the operator's core network, or over a wider network such as the Internet.

The electronic device 14 transmits data and control signaling via a base station 30 or other access point that operates in accordance with a cellular or mobile device network protocol such as, but not limited to a protocol promulgated by the 3^{rd} Generation Project Partnership (3GPP). An exemplary base station 30 may be a long term evolution (LTE) base station, often referred to as an enhanced Node B (eNodeB or eNB), or a next generation Node B (gNB). The base station 30 services one or more electronic devices, including the electronic device 14. The base station 12 may support communications between the electronic devices and a network medium 16 through which the electronic devices may communicate with other electronic devices, servers, which can be connected within the operator's core network, or via the Internet, etc. One device that the electronic device 14 may communicate with via the network medium 16 is the media production element 12. It will be understood that other locations in the network architecture for the media production element 12 are possible. As an example of another location of the media production element 12, the media production element 12 may be a server on the Internet for streaming services that are not managed by a wireless network operator.

The source of the streamed data may be any client or terminal of the base station 12. An exemplary electronic device 14 that can be the source of the streamed data may be a user equipment (UE), as referred to in accordance with the general terminology adopted in 3GPP specifications. The electronic device 14 may be any kind of electronic device that provides a media stream via a wireless interface 18 (e.g., a 3GPP wireless modem). Exemplary electronic devices 14 include, but are not limited to, a smart phone, a tablet computer, a desktop or laptop computer, a video camera, etc. In the case of a video camera, the video camera may be included in a drone, may be operated by a person, may be an autonomous surveillance camera, etc. In one embodiment, the video camera may be a professional style camera used by a news or live event reporting organization. The electronic device 14 also may be the source of a contribution feed that is transmitted via an uplink, such as an outside-broadcast van or mobile studio that transmits a contribution feed as an aggregate of several cameras or other device feeds, or as a pre-produced edit and audio mix of an event being covered. In these contribution feed situations, a plurality of electronic devices may also be providing contribution feeds pertaining to the same event. The video camera may include the wireless interface 18 or may be operatively connected through a local interface to the wireless interface 18 using a cable or electrical connector, for example. In the case of a video camera operated by a news or live event reporting organization, the organization may make an arrangement with the operator of the mobile network to provide enhanced bandwidth capacity to support audiovisual content streaming. For example, the video camera may have access to multiple carriers in the network to deliver content using carrier aggregation. The wireless network could also provide sufficient bandwidth capacity for the media stream in a single carrier or channel.

The media production element 12 may include operational components for carrying out wireless communications and other functions of the media production element 12. For instance, the media production element 12 may include a control circuit 20 that is responsible for overall operation of the media production element 12, including controlling the media production element 12 to carry out the operations applicable to the media production element 12 and described in greater detail below. The control circuit 20 includes a processor 22 that executes code 24, such as an operating system and/or other applications. The functions described in this disclosure document and applicable to the media production element 12 may be embodied as part of the code 24 or as part of other dedicated logical operations of the media production element 12. The logical functions and/or hardware of the media production element 12 may be implemented in other manners depending on the nature and configuration of the media production element 12. Therefore, the illustrated and described approaches are just examples and other approaches may be used including, but not limited to, the control circuit 20 being implemented as, or including, hardware (e.g., a microprocessor, microcontroller, central processing unit (CPU), etc.) or a combination of hardware and software (e.g., a system-on-chip (SoC), an application-specific integrated circuit (ASIC), etc.).

The code 24 and any stored data (e.g., data associated with the operation of the media production element 12) may be stored on a memory 26. The code 24 may be embodied in the form of executable logic routines (e.g., a software program) that are stored as a computer program product on a non-transitory computer readable medium (e.g., the memory 26) of the media production element 12 and are executed by the processor 22. The functions described as being carried out by the media production element 12 may be thought of as methods that are carried out by the media production element 12.

The memory 26 may be, for example, one or more of a buffer, a flash memory, a hard drive, a removable media, a volatile memory, a non-volatile memory, a random access memory (RAM), or other suitable device. In a typical arrangement, the memory 26 includes a non-volatile memory for long term data storage and a volatile memory that functions as system memory for the control circuit 20. The memory 26 is considered a non-transitory computer readable medium.

The media production element 12 includes communications circuitry that enables the media production element 12 to establish various communication connections. For instance, the media production element 12 may have a network communication interface 28 to communicate with the network medium 16.

The electronic device 14 may include operational components for carrying out various functions of the electronic device 14 including wireless communications with the base station 30 and any other devices with which the electronic device 14 may communicate. One function of the electronic device 14 is network assisted uplink streaming and/or event-coordinated network assisted uplink streaming as will be described in greater detail. Among other components, the electronic device 14 may include a control circuit 32 that is responsible for overall operation of the electronic device 14, including controlling the electronic device 14 to carry out the operations described in greater detail below. The control circuit 32 includes a processor 34 that executes code 36, such as an operating system and/or other applications. The functions described in this disclosure document may be embodied as part of the code 36 or as part of other dedicated logical operations of the electronic device 14. The logical functions and/or hardware of the electronic device 14 may be implemented in other manners depending on the nature and configuration of the electronic device 14. Therefore, the illustrated and described approaches are just examples and other approaches may be used including, but not limited to, the control circuit 32 being implemented as, or including, hardware (e.g., a microprocessor, microcontroller, central processing unit (CPU), etc.) or a combination of hardware and software (e.g., a system-on-chip (SoC), an application-specific integrated circuit (ASIC), etc.).

The code 36 and any stored data (e.g., data associated with the operation of the electronic device 14) may be stored on a memory 38. The code 36 may be embodied in the form of executable logic routines (e.g., a software program) that are stored as a computer program product on a non-transitory computer readable medium (e.g., the memory 38) of the electronic device 14 and are executed by the processor 34. The functions described as being carried out by the electronic device 14 may be thought of as methods that are carried out by the electronic device 14.

The memory 38 may be, for example, one or more of a buffer, a flash memory, a hard drive, a removable media, a volatile memory, a non-volatile memory, a random access memory (RAM), or other suitable device. In a typical arrangement, the memory 38 includes a non-volatile memory for long term data storage and a volatile memory that functions as system memory for the control circuit 32. The memory 38 is considered a non-transitory computer readable medium.

The electronic device 14 includes communications circuitry that enables the electronic device 14 to establish various communication connections. For instance, the electronic device 14 includes the wireless interface 18 over which wireless communications are conducted with the base station 30. Other communications may be established with the electronic device 14, such as Wi-Fi communications, wired connections, etc. The wireless interface 18 may include a radio circuit having one or more radio frequency transceivers (also referred to as a modem), at least one antenna assembly, and any appropriate tuners, impedance matching circuits, and any other components needed for the various supported frequency bands and radio access technologies.

Other components of the electronic device 14 may include, but are not limited to, user inputs (e.g., buttons, keypads, touch surfaces, etc.), a display, a microphone, a speaker, a sensor, a jack or electrical connector, a rechargeable battery and power supply unit, a SIM card, a motion sensor (e.g., accelerometer or gyro), a GPS receiver, and any other appropriate components. In particular, the electronic device 14 may include a camera assembly 40 with all appropriate optical and electronic imaging components, as well as components such as a video processor, video and audio encoders, etc.

In some implementations the logic (e.g., as implemented by the control circuit 20) that controls the wireless communication interface 18 is a so-called lower layer protocol architecture, and may include a physical layer, a medium access layer, a radio resource control layer, etc. This may be referred to as a modem entity of the electronic device 14. Further, in some implementations, the logic controlling the video media client and corresponding video content encoding, and any related functions, is a so-called higher layer architecture, and may include an IP layer, an application layer, etc. This logic may be referred to as an application entity, and may include an uplink video streaming client. With this separation in layers, in some implementations, the wireless modem entity communication with the cellular base station 30 is separated logically from the application entity data communication carried out with the media production element 12.

The network system 10 may include a network assistance device 42 that can provide network assistance services to any network element, including the electronic device 14 and/or the media production element 12 during uplink streaming. In an exemplary embodiment, the network assistance device 42 can be a DASH-aware network element (DANE). While DASH refers to dynamic adaptive streaming over hypertext transfer protocol (HTTP), the DANE may provide network assistance to uplink streaming that is carried out according to additional and/or other protocols, such as HTTP live streaming (HLS), real time transmission protocol (RTP), real time messaging protocol (RTMP), etc. In another exemplary embodiment, the network assistance device 42 can be implemented as part of a 3GPP framework for live uplink streaming (FLUS).

The network assistance device 42 may include operational components for carrying out various functions of the network assistance device 42 including providing uplink network assistance services to the electronic device 14 and/or media production element 12. Among other components, the network assistance device 42 may include a control circuit 44 that is responsible for overall operation of the network assistance device 42, including controlling the network assistance device 42 to carry out the operations described in greater detail below. The control circuit 44 includes a processor 46 that executes code 48, such as an operating system and/or other applications. The functions described in this disclosure document may be embodied as part of the code 48 or as part of other dedicated logical operations of the network assistance device 42. The logical functions and/or hardware of the network assistance device 42 may be implemented in other manners depending on the nature and configuration of the network assistance device 42. Therefore, the illustrated and described approaches are just examples and other approaches may be used including, but not limited to, the control circuit 44 being implemented as, or including, hardware (e.g., a microprocessor, microcontroller, central processing unit (CPU), etc.) or a combination of hardware and software (e.g., a system-on-chip (SoC), an application-specific integrated circuit (ASIC), etc.).

The code 48 and any stored data (e.g., data associated with the operation of the network assistance device 42) may be stored on a memory 50. The code 48 may be embodied in the form of executable logic routines (e.g., a software program) that are stored as a computer program product on a non-transitory computer readable medium (e.g., the memory 50) of the network assistance device 42 and are executed by the processor 46. The functions described as being carried out by the network assistance device 42 may be thought of as methods that are carried out by the network assistance device 42.

The memory 50 may be, for example, one or more of a buffer, a flash memory, a hard drive, a removable media, a volatile memory, a non-volatile memory, a random access memory (RAM), or other suitable device. In a typical arrangement, the memory 50 includes a non-volatile memory for long term data storage and a volatile memory that functions as system memory for the control circuit 44. The memory 50 is considered a non-transitory computer readable medium.

The network assistance device 42 includes communications circuitry that enables the network assistance device 42 to establish various communication connections. For instance, the network assistance device 42 includes a network interface 52 over which communications are conducted with the media production element 12, the electronic device 14 and any other devices via the network medium 16.

In the illustrated embodiment, the network assistance device 42 is implemented as a server that is out-of-band of the media delivery path of the content transmitted over the uplink stream from electronic device 14 to media production element 12. With an out-of-band architecture it is possible that the communication between the electronic device 14 and the network assistance device 42 is independent of communication between the electronic device 14 and the media production element 12. Therefore, communications between the electronic device 14 and the network assistance device 42 may occur in a separate communication path and/or data link than the communication path and/or data link used for the uplink steam. As such, the network assistance device 42 may be provided at various locations in the network system 10. For example, the network assistance device 42 may communicate with the electronic device 14 through the base station 30 as illustrated, through a different base station, or directly with the electronic device 14. In another embodiment, the functionality of the network assistance device 42 may be made part of the media production element 12.

The network system 10 also may include a third party media element 54. Data streamed from the electronic device 14 to the media production element 12 (via the base station 30 and its uplink data path) may be delivered to the third party media element 54. In one embodiment, the media production element 12 temporarily buffers the streamed data received from the electronic device 14 and delivers the data through the network medium 16 using an appropriate protocol, the details of which need not be discussed in detail for the purposes of this disclosure. In the case where the electronic device 14 is a video camera, the third party media element 54 may be part of a television studio that processes, stores and/or redistributes the audiovisual content received from the electronic device 14 to media players (e.g., TVs, smart phones, handheld devices, etc.). The content may be consumed by end users in a "tape-delayed" or "live" manner on the media players. In other situations, the third party media element 54 may be an end user device, or one of many end user devices that receive the media stream via a broadcast or multicast retransmission from the media production element 12 or other device (e.g., a retransmission server connected to the media production element 12).

### C. Event-Coordinated Network Assistance for Uplink Streaming

### Signaling

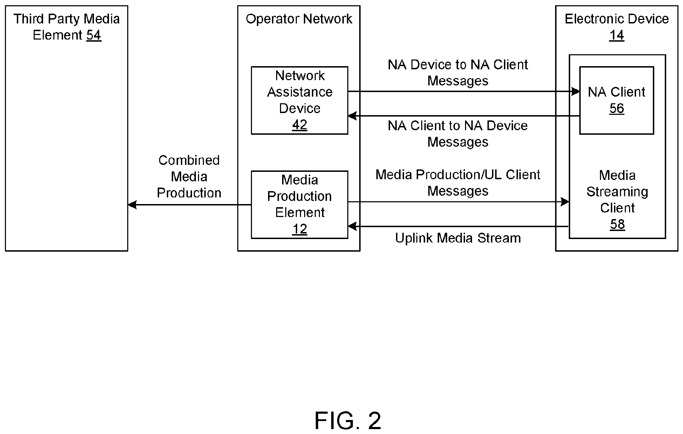

FIG. 2 is a high-level architectural diagram of an uplink network assistance system that can be implemented for event-coordinated uplink network assistance that shows some of the system's signal flows and may be referenced in connection with the following descriptions as a representative approach to event-coordinated uplink network assistance.

In one embodiment, to assist in providing an improved quality of experience for the uplink video streaming, a signaling path may be established for network assistance (NA). Therefore, to implement NA functions, a signaling approach between the electronic device 14 and the network assistance device 42 may be established. In one embodiment this NA signaling approach is established between the electronic device 14 NA client 56 and the network assistance device 42. In a first direction, the network assistance device 42 can send event-coordinated uplink network assistance data to the NA client 56 of the electronic device 14 as described below. In a second direction, the NA client 56 of the electronic device 14 can send messages to the network assistance device 42. Such messages can include an event registration request, a request for event-coordinated uplink network assistance data, or device-related information. For example, device-related information can include information about available media quality levels such as frame rates, video and audio resolutions, etc.

In one embodiment, the media production element 12 and an uplink client 58 of the electronic device share data paths. In a first direction, the media production element 12 can send messages to the uplink client 58 of the electronic device 14. For example, the media production element 12 messages can include requests for segments of the media stream, pause or resume stream commands, among others. In a second direction, the uplink client 58 of the electronic device 14 can transmit the uplink media stream to the media production element 12. In some embodiments, the media production element 12 can process the media stream from the electronic device 14 along with media streams from other electronic devices to create a combined media production. This combined media production can be transmitted to a third party media element 54. Third party media element 54 can further edit, view, display, or publish the combined media production. It should be appreciated that the described communication paths and functions of the network assistance device 42 and the media production element 12 can exist interchangeably between the two elements, or the communication paths and functions can exist in a single element.

### General Operation

Certain events may involve multiple electronic devices simultaneously transmitting data in an area where there is a significant amount of electronic devices. In these situations, even if the wireless network may consist of multiple base stations, there is a high likelihood that the uplink data capacity is a limiting factor for the achievable uplink data rate on each of the electronic device to base station links. Also, due to the nature of wireless links causing channel fading, the achievable data rate in the uplink direction will vary over time as well even without considering the total uplink cell load. Using prior art systems, each connected electronic device would try to optimize its own transmission to create as high individual quality as possible without regard to any other electronic device, requiring as much uplink data capacity as available for each client.

Media production element 12 operates a media production service and can be configured to combine multiple live media streams of an event, when the multiple live media streams are being streamed by multiple electronic devices. The media production element 12 combines media content from a plurality of the streaming electronic devices when they are registered to be within the same streaming event. The media production element 12 can produce a combined live video stream or a combined media production using selections and combinations of the streamed content provided by the multiple electronic devices. In these embodiments, the network assistance device 42 can determine event-coordinated uplink network assistance data with the goal of prioritizing resource allocation to clients/electronic devices 14 that currently are used for the combined media production, and assign less resources to those that are not currently used. Rather than optimizing individual links, the event-coordinated uplink network assistance data is determined by taking the aggregated capacity and the production needs of the media production element 12 into account.

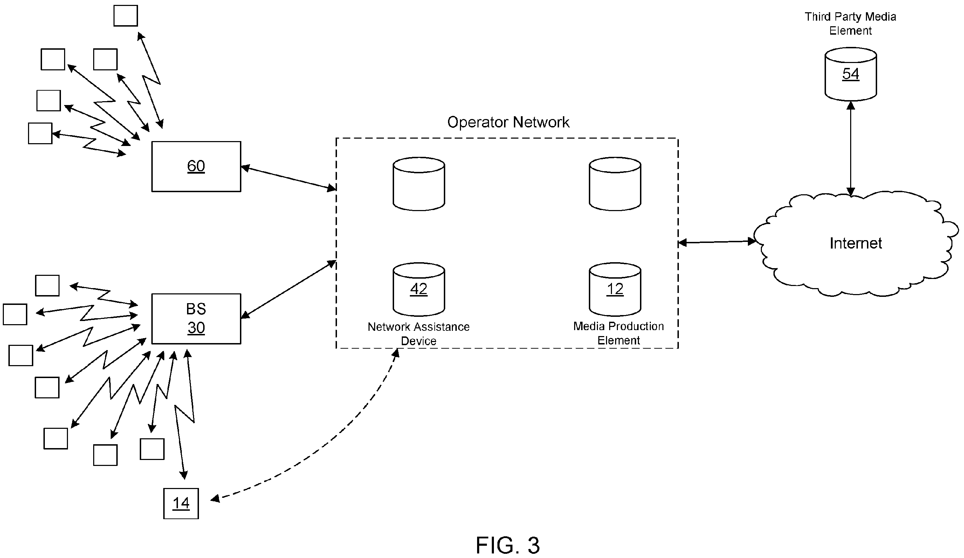

Example network architectures of various embodiments are provided in FIGS. 3-5. In general, several different architectures can be used to implement the different functions of network assistance and media production, and it should be appreciated that the functions can be implemented as separate nodes or within any other node.

Turning now to FIG. 3, the network assistance device 42 and the media production element 12 are implemented on nodes located on the operator network, but separate from the base station 30 (e.g. eNB, or gNB). Both the network assistance device 42 and the media production element 12 can be in communication with the base station 30 and/or directly with the electronic device 14. Network assistance device 42 and media production element 12 can communicate and provide functionality to the base station 30 and also to a second base station 60. Base station 30 and second base station 60 may or may not provide service to electronic devices corresponding to the same event.

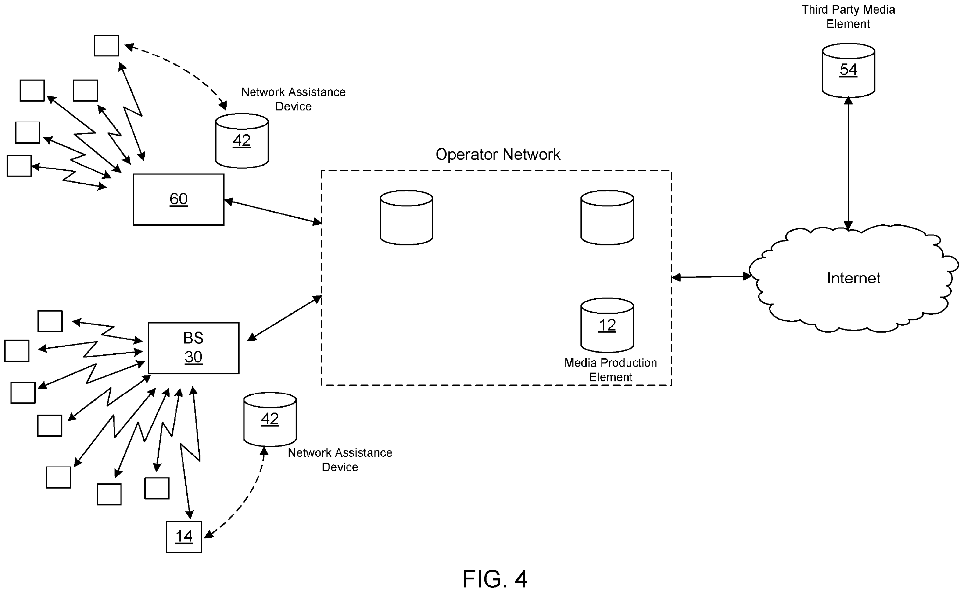

Turning now to FIG. 4, the network assistance device 42 may be implemented in or connected to the base station 30 (e.g. eNB, or gNB), and therefore have information about the scheduling load or other indications of the available uplink transmission capacity. In certain embodiments, the network assistance device 42 can be implemented in or connect to a second base station 60, which may or may not provide service to electronic devices corresponding to the same event.

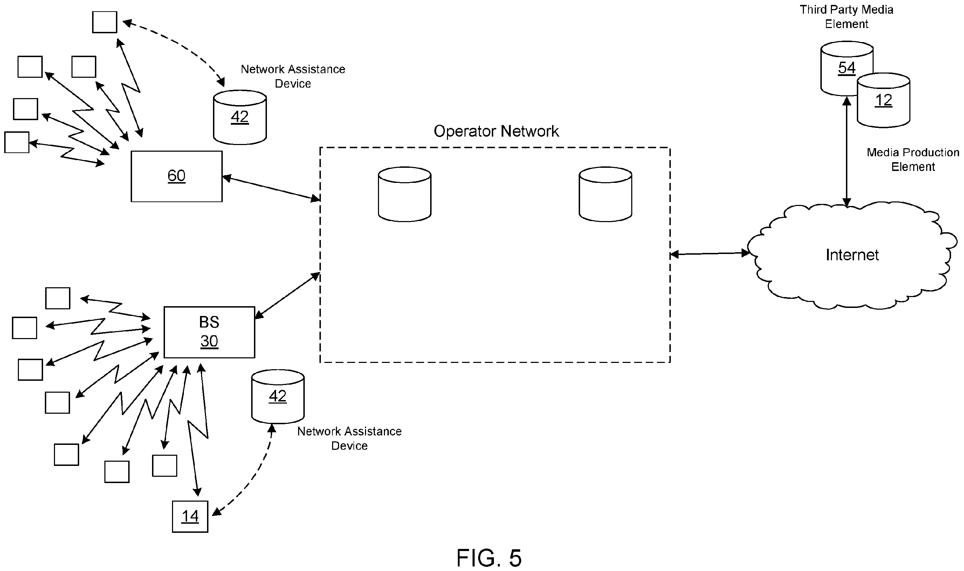

Turning now to FIG. 5, the network assistance device 42 may be implemented in or connected to the base station 30 as described above with respect to FIG. 4. Further, the media production element 12 may be implemented in or connected to a third party media element 54. In these embodiments, the media production element 12 is not a part of the operator network and can be integrated with the third party media element 54.

Regardless of the network architecture arrangement, the event-coordinated uplink network assistance systems and methods can function as described below. A media streaming client 58, residing in a transmitting device (e.g. electronic device 14), can establish an uplink media streaming session to belong to a certain event. Further, one or more additional streaming clients at the event can also establish an uplink media streaming session to belong to the event. Examples of such events are concerts, sports events and news events. This event registration can be accomplished with a network function, for example, with a network assistance device 42 for video streaming. In one example, the network assistance device 42 can be a DASH aware network element (DANE), where the video streaming session could be initiated. In another example, the network assistance device 42 can be a part of a 3GPP framework for live uplink streaming (FLUS). In certain embodiments, the event registrations, creating links between the media streaming electronic devices to the network assistance device 42, can be performed directly between media streaming electronic devices and the network assistance device 42. For example, this event registration process can be performed using DNS lookup to identify the IP address of the relevant network assistance device 42, or indirectly via another node such as the media production element 12.

In certain embodiments, the network assistance device 42 and the media production element 12 may be defined as different entities, but they could as well be the same network entity, meaning, for example, that a registration performed with respect to a network assistance device 42 directly and this network assistance device 42 may also include a media production element 12.

When the electronic device 14 is registered/initiated into an event, the electronic device 14 will be able to receive event-coordinated uplink network assistance data that is specific to the event, from the network assistance device 42. This event specific information can include information related to its own streaming session, and can also include information related to the total event in which multiple electronic devices can be connected. Such information could include but is not limited to information about the number of electronic devices registered to the event, the total allocated network resources for the event, or information related to the radio link performance on its established link compared to other client-to-network links. Such information can be provided regularly by the network assistance server in a request-response fashion, where the electronic device 14 receives event information from the network assistance device 42 based on requesting the information. The information may also be "pushed" to the electronic device 14 from the network assistance device 42, that is, be delivered without an explicit request from the electronic device 42. When the electronic device 14 receives such event specific information it may adapt its transmissions of content in order to optimize the overall combined media production and/or to optimize the wireless network load and/or to reduce the energy consumption in the electronic device 14.

In certain embodiments, the event-coordinated uplink network assistance data is shared once during the registration. In other embodiments, the event-coordinated uplink network assistance data can be shared multiple times. For example the network assistance device 42 can transmit assistance information with a certain periodicity, or the network assistance device 42 can respond with assistance information upon receiving information requests from an electronic device 14. The event-coordinated uplink network assistance data could provide the electronic device 14 with additional information for the streaming session that enables an improved streaming performance for the individual electronic device 14 and for the total group of electronic devices also registered to the event. For example, the electronic device 14 may use the event-coordinated uplink network assistance data to adapt its transmission during the streaming event. Such adaptation could be to increase or decrease the streaming video resolution and/or frame rate, selecting a media codec, selecting a media operating point, selecting a media quality, selecting a data rate, selecting a compression level, pausing the data streaming session, or resuming the data streaming session. The event-coordinated uplink network assistance data may depend on the number of connected electronic devices, e.g. within a given geographic area or connected to a certain base station, or registered to a certain event. As a benefit for the electronic device 14, this may reduce the device energy consumption during streaming. In certain embodiments, another incentive to register to the event production could be to gain access to the final combined media production, and/or receive a revenue share if the combined media production is published.

Further, while the electronic device 14 is registered and active in a streaming event, the event-coordinated uplink network assistance data received by the electronic device 14 can also include uplink transmission commands or recommendations from the network assistance device 42 coordinating the event. Such uplink transmission commands or recommendations can be received as part of a request-response procedure. Specifically, the transmission commands or recommendations are executed to coordinate multiple uplink streaming electronic devices to produce a combined media production. Such coordination could consist of providing the electronic device 14 with requests/recommendations on its streaming transmissions, in order to enable the network assistance device 42, media production element 12, and/or third party media element 54 to optimize the combined media production. In certain situations, not all uplink media streams registered to an event are individually as important, and therefore some of the uplink media streams can, for example, at certain times be reduced in its media rate or paused. However, for the media production in the third party media element 54 or the media production element 12, it is still important to see as many media streams as possible in order to quickly respond to changes in the media streams. The media production element 12 or third party media element 54 can transmit media optimization information to the network assistance device 42 to instruct the network assistance device 42 the priority level of each media stream. The network assistance device 42 can continuously coordinate the quality levels, pause, or resume for each stream to give the media production element 12 or the third party media element 54 the best possible input for the production, but still reduce the network load.

Certain embodiments also include electronic device 14 to network assistance device 42 information sharing. In these embodiments, the electronic device 14 can provide device-related information to the network assistance device 42. The device-related information can include information about the electronic device's 14 available media quality levels. This can include available frame rates, video resolutions, audio resolutions, etc. This information can be provided to the network assistance device 42 so that the network assistance device 42 can select or recommend between available media quality levels. This communication can occur when the electronic device 14 registers its uplink data stream to the network assistance device 42 as part of an event.

In addition to providing requests/recommendations to the electronic device 14 regarding its streaming transmissions, the network assistance device 42 can request, from other network functions including radio access functions, suitable priority in scheduling and/or other network resource allocation. For example, if a network assistance device 42 detects that electronic devices registered to an event require additional resources, e.g. radio access capacity, in order to provide media streams of an acceptable quality as determined by the media production element 12, resources can be diverted from other traffic. In other embodiments a network assistance device 42 may provide information indicative of a priority for a given electronic device 14 to other network functions. In this manner, network assistance device 42 can affect prioritization of certain events' data streams over other events' data streams or over other unrelated traffic in the network. Also, network assistance device 42 may affect prioritization of data related to certain electronic devices compared to other electronic devices. In certain embodiments the network assistance device 42 or any other network function may provide information to an electronic device 14 participating in an event about intended or given network priority or a change of network priority. Such information provided to the electronic device 14 may indicate to the electronic device 14 whether the event participation affects the data priority for the device within the network. Such information may be indicative of a time period for such priority change, e.g. during how long time a change in priority is valid.

The combined media production can be constructed by selecting segments provided by the media streams from different electronic devices over time. In certain embodiments, the media production element 12 constructs the combined media production. In other embodiments, the third party media element 54 constructs the combined media production. The media production element 12 and/or third party media element 54 can assign priorities to individual streams based on whether the individual stream is currently being used as part of the combined media production, whether the stream may be used in the near future as part of the combined media production, or whether the individual stream is not currently needed. Such priorities can be communicated to the network assistance device 42 so that the network assistance device 42 can use these priorities in determining the event-coordinated uplink network assistance data to be sent to the corresponding electronic device 14. In an example, if the segments currently selected for the combined media production are being transmitted from one electronic device 14 at a given point of time, the network assistance device 42 can during that time instruct one or more other electronic devices to transmit uplink segments in medium to low quality and or frame rate since it may want to select any of these electronic devices for an upcoming media segment. Further, the network function may instruct one or more other electronic devices to pause the streaming or not to transmit uplink media segments for a given period of time, since the network assistance device 42 may currently not consider any of their uplink media segments to be important or suitable for use in the combined media production. The selection of quality/rate levels and/or transmission pauses can be decided based on both the media production element's 12 prioritization of media streams and estimations or measurements of the uplink capacity as a whole.

In certain embodiments, another network/device interaction exists not only in real time uplink transmissions, but also for stored content. For example, if an electronic device's 14 uplink data stream has been paused based on a recommendation from the network assistance service, and therefore not transmitted in the real time session during a time segment, the network assistance service can request uploading of the paused segment of data at a later time. Further, if data during the real time uplink transmission was limited in frame rate/resolution based on a recommendation from the network assistance service, the electronic device 14 can store a higher quality data segment for the corresponding time segment. The higher quality data segment can be requested later (e.g. when the network capacity is not restrained) by the network assistance service or by the media production service. As used herein, the terms data stream and data segment can refer to any type of data including, but not limited to audio data, video data, or a combination of audio and video data.

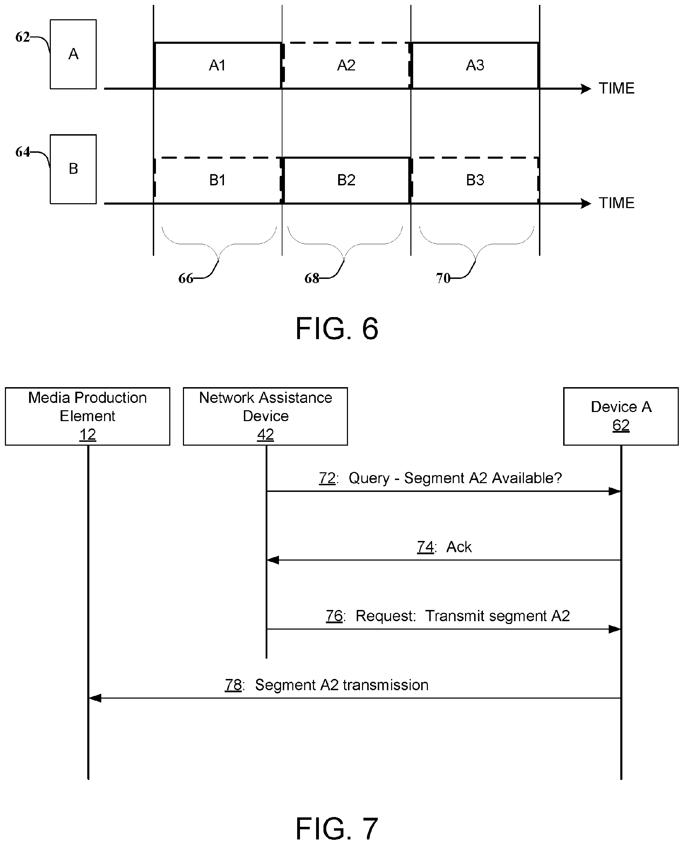

Turning now to FIG. 6, a diagram of a representative embodiment is presented to display a first data stream produced by a first electronic device 62, and a second data stream produced by a second electronic device 64. Both data streams are registered to an event with the network assistance service. During a first time segment 66, the first electronic device 62 produces data segment A1 and the second electronic device 64 produces data segment B1. The media production service, operating on the media production element 12 for example, can indicate a preference for data segment A1 over data segment B1. In another example, the network assistance service may decide to utilize its network resources to receive content from a particular electronic device (e.g. first electronic device 62) within the event. The resulting event-coordinated uplink network assistance data from the network assistance service recommends that the first electronic device 62 upload data segment A1, and that the second electronic device 64 pauses upload of data segment B1. However, although the content of data segment B1 is not transmitted, the second electronic device 64 may store data segment B1 locally within the device. The stored data segment may be stored in the electronic device 64 for example, in a local memory 38 or on a memory card. In certain embodiments, the network assistance service can transmit a local storage request to request an electronic device to locally store content that the network assistance service or media production service does not require during a time segment of the live streaming event. Alternatively, an electronic device can decide for itself to locally store content, or do so by default.

During the second time segment 68, the media production service or network assistance service can indicate a preference for data segment B2 over data segment A2. The resulting event-coordinated uplink network assistance data from the network assistance service recommends that the second electronic device 64 upload data segment B2, and that the first electronic device 62 pauses upload of data segment A2. However, although the content of data segment A2 is not transmitted it may still be stored locally within the device. The stored data segment may be stored in the electronic device 62 for example, in a local memory 38 or on a memory card. Similarly, during the third time segment 70, the media production service or network assistance service indicates a preference for data segment A3 or B3 and the electronic devices can react as described above.

In another embodiment, an electronic device may transmit a low quality version of a data segment in real-time, but store a high quality version of the data segment in local memory. For example, during the third time segment 70, the first electronic device 62 can transmit data segment A3 in real-time at a reduced bitrate due to limited network resources during the real-time uplink streaming session. Even though the first electronic device 62 transmits the data segment A3 at a reduced bitrate, the first electronic device 62 can locally store a high quality version of data segment A3. When network conditions are more favorable, the network assistance service or media production service can request the first electronic device 62 to transmit the high quality version of data segment A3 to the media production service.

After time segment 68 has passed, the media production service may decide that it desires a data segment that has not been uploaded as part of the real-time uplink data stream. In certain situations, the media production service or the network assistance service may request a stored data segment to be sent when network conditions are more favorable. For example, the media production service may decide that it desires data segment A2. The media production service and the network assistance service may interact with an electronic device in a way to request and receive stored data segments as described below.

Turning now to FIG. 7, the network assistance protocol can include functionality and commands for requesting stored content from a device participating in an uplink streaming event. The network assistance service on the network assistance device 42 can transmit a query 72 to the first electronic device 62 to ask whether a stored data segment is available. In certain embodiments, the query 72 can include a query for the availability for multiple data segments (e.g. B1, A2, and B3). In response to receiving the query 72, the first electronic device 62 can determine whether the stored data segment is available locally. If the requested stored data segment is available locally, the first electronic device 62 can transmit an acknowledgment 74 to the network assistance service. After receiving the acknowledgement 74, the network assistance service can transmit a request 76 to the first electronic device 62. The request 76 asks the first electronic device 62 to transmit the stored data segment to the media production service on the media production element 12. In certain embodiments, the request 76 can include a request for multiple available data segments. In response to the request 76, the first electronic device 62 initiates a transmission 78 of the stored data segment that has been requested to the media production service.

In some embodiments, the method can bypass the query 72 and the acknowledgment 74. In these embodiments, the network assistance service transmits the request 76 to the first electronic device 62. If the requested data segment is not available, the first electronic device 62 can transmit a message to the network assistance service to notify the network assistance service that the data segment is not available. If the requested data segment is available, the first electronic device 62 can proceed with the transmission 78 of the data segment to the media production service.

A further feature involves the ability of the network assistance service and/or the media production service to transmit event specific information to an event-registered electronic device 14 for display to a user of the electronic device 14 as part of a user interface viewable on a display of the electronic device 14. This event specific information can include an indication of a number of connected devices in the event, requests to start or stop filming, custom messages from an administrator, and indication whether or not segments are currently being uploaded from the device. Further, the network assistance service may indicate to the electronic device 14 that certain requests to the electronic device 14 should be provided to such user interface if possible. In that manner the network assistance service can specifically ask the electronic device 14 to make specific information or commands available to a user of the electronic device 14, or indicate information that the network assistance service does not allow the electronic device 14 to share within the user interface. In further embodiments, the network assistance service or the media production service can transmit control signals to an electronic device 14 to control aspects of the electronic device 14 such as camera commands including pan, tilt, zoom, or focus commands, recording commands, pause commands, and stop commands, among others.

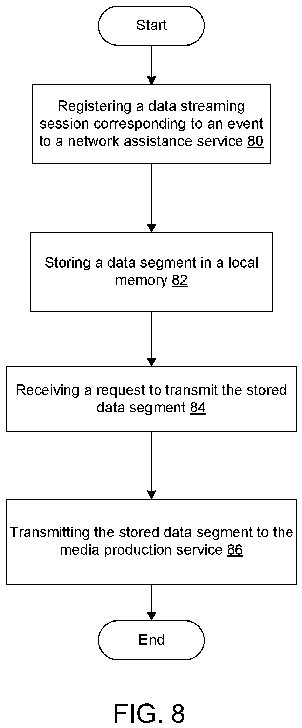

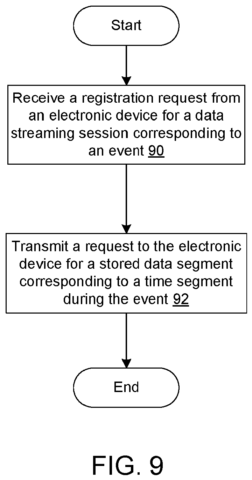

FIGS. 8 and 9 describe methods performed by network elements disclosed herein. It should be appreciated that any of the following methods can be performed individually, simultaneously, or in combination with each other.

Turning now to FIG. 8, an embodiment of a method for providing data from an electronic device to a media production service in a network is disclosed. At reference numeral 80, the electronic device registers a data streaming session that corresponds to an event to a network assistance service. The data streaming session includes a plurality of data segments. At reference numeral 82, the electronic device stores a data segment of the plurality of data segments in a local memory. The data segment corresponds to a time segment during the event. At reference numeral 84, the electronic device receives a request to transmit the stored data segment. The request can be received from either the network assistance service or the media production service. At reference numeral 86, the electronic device transmits the stored data segment to the media production service in response to receiving the request.

Turning now to FIG. 9, an embodiment of a method for providing event-coordinated uplink network assistance by a network assistance service to a plurality of electronic devices during streaming of data from the plurality of electronic devices in a network during an event is disclosed. At reference numeral 90, the network assistance service receives a registration request from an electronic device of the plurality of electronic devices for a data streaming session corresponding to the event. The data streaming session includes a plurality of data segments. At reference numeral 92, the network assistance service transmits a request to the electronic device for a stored data segment of the plurality of data segments. The stored data segment corresponds to a time segment during the event.

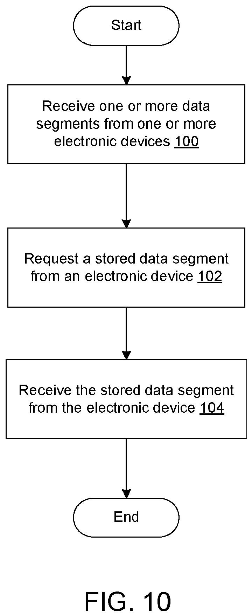

Turning now to FIG. 10, an embodiment of a method for producing a combined media production is disclosed. At reference numeral 100, the media production service receives one or more data segments from one or more electronic devices participating in an event-coordinated uplink streaming session pertaining to an event. The one or more data segments correspond to one or more time segments during the event. At reference numeral 102, the media production service requests a stored data segment from an electronic device of the one or more electronic devices. The stored data segment corresponds to a time segment of the one or more time segments. At reference numeral 104, the media production service receives the stored data segment from the electronic device. In certain embodiments, the media production service can than insert the stored data segment into the combined media production at the corresponding time segment.

### D. Conclusion

Although certain embodiments have been shown and described, it is understood that the scope of the invention is defined by the appended claims.

## Claims

1. A method of providing data from an electronic device (14) to a media production service in a network, comprising:
registering, by the electronic device (14), an uplink data streaming session to an event, wherein the data streaming session comprises a plurality of data segments and the event being a live situation at which multiple electronic devices that are registered to the event simultaneously produce and transmit respective uplink media streams to the media production service;
storing, by the electronic device (14), a high quality version of a data segment of the plurality of data segments in a local memory, wherein the data segment corresponds to a time segment during the event;
receiving, by the electronic device (14), a request to transmit the stored data segment;
transmitting, by the electronic device (14), the stored data segment to the media production service in response to receiving the request;
receiving, by the electronic device (14), event-coordinated uplink network assistance data from a network assistance service, **characterized in that** the event-coordinated uplink network assistance data pertains to the time segment during the event;
pausing, by the electronic device (14), the data streaming session during the time segment or transmitting, by the electronic device (14), a low quality version of the data segment during the time segment based on the event-coordinated uplink network assistance data;
receiving, by the electronic device (14), a query from the network assistance service, wherein the query requests a confirmation whether the high quality version of the stored data segment is available; and
transmitting, by the electronic device (14), an acknowledgement to the network assistance service in response to receiving the query to confirm that the high quality version of the stored data segment is available.

2. The method of claim 1, wherein the network assistance service is implemented in or connected to a base station (30).

3. An electronic device comprising a wireless interface (18) and a control circuit (32) configured to carry out the method of any of claims 1-2.

4. A method of providing event-coordinated uplink network assistance by a network assistance service to a plurality of electronic devices in a network during an event, the event being a live situation to which the plurality of electronic devices are registered and from which the plurality of electronic devices simultaneously produce and transmit respective uplink media streams to a media production service, comprising:
receiving, by the network assistance service, a registration request from an electronic device of the plurality of electronic devices for a data streaming session corresponding to the event, wherein the data streaming session comprises a plurality of data segments;
transmitting, by the network assistance service, a request to the electronic device for a stored data segment of the plurality of data segments, the stored data segment corresponding to a time segment during the event;
determining, by the network assistance service, event-coordinated uplink network assistance data pertaining to the time segment during the event, wherein the event-coordinated uplink network assistance data is at least partially based on network resources available for the plurality of data streaming sessions during the time segment;
transmitting, by the network assistance service, the event-coordinated uplink network assistance data to the electronic device,
wherein the event-coordinated uplink network assistance data comprises:
a command to pause the data streaming session during the time segment; or
a command to transmit a low quality version of the data segment during the time segment, and the request to the electronic device for the stored data segment that corresponds to the time segment is a request for a high quality version of the data segment;
determining, by the network assistance service, that network resources are insufficient for the electronic device to transmit the data segment during the time segment;
determining, by the network assistance service, that network resources are sufficient for the electronic device to transmit the data segment at a time after the time segment, wherein the request to the electronic device for the stored data segment is transmitted in response to determining that network resources are sufficient;
transmitting, by the network assistance service, a query to the electronic device, wherein the query requests a confirmation whether the stored data segment is available from the electronic device; and
receiving, by the network assistance service, an acknowledgement from the electronic device in response to the query, wherein the acknowledgment confirms that the stored data segment is available, and the request for the stored data segment is transmitted in response to receiving the acknowledgment.

5. The method of claims 4, wherein the network assistance service is hosted by a DASH-aware network element (DANE) (42) or a framework for live uplink streaming (FLUS).

6. The method of any of claims 4-5, wherein the network assistance service is implemented in or connected to a base station (30).

7. A network element (42) that hosts a network assistance service, comprising a network interface (52) and a control circuit (44) configured to carry out the method of any of claims 4-6.

8. A method of producing a combined media production, comprising:
receiving, by a media production service, data segments from each of plural electronic devices participating in an event-coordinated uplink streaming session pertaining to an event, the one or more data segments corresponding to one or more time segments during the event and the event being a live situation to which the plurality of electronic devices are registered and from which the plurality of electronic devices simultaneously produce and transmit respective uplink media streams to a media production service;
requesting, by the media production service, a stored data segment from one of the plural electronic devices, the stored data segment corresponding to a time segment of the one or more time segments;
receiving, by the media production service, the stored data segment from the electronic device; and
creating, by the media production service, the combined media production by inserting the stored data segment into the combined media production at the time segment,
**characterized in that** the one of the plurality of electronic devices (14):
receives event-coordinated uplink network assistance data from a network assistance service pertaining to the time segment during the event;
pauses the data streaming session or transmits a low quality version of the data segment during the time segment based on the event-coordinated uplink network assistance data;
receives a query from the network assistance service, wherein the query requests a confirmation whether the stored data segment is available; and
transmits an acknowledgement to the network assistance service in response to receiving the query to confirm that the stored data segment is available.

## Patentansprüche

1. Verfahren zum Bereitstellen von Daten von einer elektronischen Vorrichtung (14) an einen Medienproduktionsdienst in einem Netzwerk, umfassend:
Registrieren, durch die elektronische Vorrichtung (14), einer Uplink-Datenstreamingsitzung für ein Ereignis, wobei die Datenstreamingsitzung eine Vielzahl von Datensegmenten umfasst und das Ereignis eine Livesituation ist, bei der mehrere elektronische Vorrichtungen, die für das Ereignis registriert sind, jeweilige Uplink-Medienströme gleichzeitig produzieren und an den Medienproduktionsdienst übertragen;
Speichern, durch die elektronische Vorrichtung (14), einer hochwertigen Version eines Datensegments der Vielzahl von Datensegmenten in einem lokalen Speicher, wobei das Datensegment einem Zeitsegment während des Ereignisses entspricht;
Empfangen, durch die elektronische Vorrichtung (14), einer Anforderung, um das gespeicherte Datensegment zu übertragen;
Übertragen, durch die elektronische Vorrichtung (14), des gespeicherten Datensegments an den Medienproduktionsdienst als Reaktion auf das Empfangen der Anforderung;
Empfangen, durch die elektronische Vorrichtung (14), von ereigniskoordinierten Uplink-Netzwerkunterstützungsdaten von einem Netzwerkunterstützungsdienst, **dadurch gekennzeichnet, dass** sich die ereigniskoordinierten Uplink-Netzwerkunterstützungsdaten auf das Zeitsegment während des Ereignisses beziehen;
Anhalten, durch die elektronische Vorrichtung (14), der Datenstreamingsitzung während des Zeitsegments oder Übertragen, durch die elektronische Vorrichtung (14), einer minderwertigen Version des Datensegments während des Zeitsegments basierend auf den ereigniskoordinierten Uplink-Netzwerkunterstützungsdaten;
Empfangen, durch die elektronische Vorrichtung (14), einer Abfrage von dem Netzwerkunterstützungsdienst, wobei die Abfrage eine Bestätigung anfordert, ob die hochwertige Version des gespeicherten Datensegments verfügbar ist; und
Senden, durch die elektronische Vorrichtung (14), einer Quittierung an den Netzwerkunterstützungsdienst als Reaktion auf das Empfangen der Abfrage, um zu bestätigen, dass die hochwertige Version des gespeicherten Datensegments verfügbar ist.

2. Verfahren nach Anspruch 1, wobei der Netzwerkunterstützungsdienst in einer Basisstation (30) implementiert oder mit dieser verbunden ist.

3. Elektronische Vorrichtung, umfassend eine drahtlose Schnittstelle (18) und eine Steuerschaltung (32), die konfiguriert ist, um das Verfahren nach einem der Ansprüche 1 bis 2 auszuführen.

4. Verfahren zum Bereitstellen einer ereigniskoordinierten Uplink-Netzwerkunterstützung durch einen Netzwerkunterstützungsdienst an eine Vielzahl von elektronischen Vorrichtungen in einem Netzwerk während eines Ereignisses, wobei das Ereignis eine Livesituation ist, für die die Vielzahl von elektronischen Vorrichtungen registriert sind und von der die Vielzahl von elektronischen Vorrichtungen jeweilige Uplink-Medienströme gleichzeitig produzieren und an einen Medienproduktionsdienst übertragen, umfassend:
Empfangen, durch den Netzwerkunterstützungsdienst, einer Registrierungsanforderung von einer elektronischen Vorrichtung der Vielzahl von elektronischen Vorrichtungen für eine Datenstreamingsitzung, die dem Ereignis entspricht, wobei die Datenstreamingsitzung eine Vielzahl von Datensegmenten umfasst;
Übertragen, durch den Netzwerkunterstützungsdienst, einer Anforderung an die elektronische Vorrichtung für ein gespeichertes Datensegment der Vielzahl von Datensegmenten, wobei das gespeicherte Datensegment einem Zeitsegment während des Ereignisses entspricht;
Bestimmen, durch den Netzwerkunterstützungsdienst, von ereigniskoordinierten Uplink-Netzwerkunterstützungsdaten, die sich auf das Zeitsegment während des Ereignisses beziehen, wobei die ereigniskoordinierten Uplink-Netzwerkunterstützungsdaten mindestens teilweise auf Netzwerkressourcen, die für die Vielzahl von Datenstreamingsitzungen während des Zeitsegments verfügbar sind, basieren;
Übertragen, durch den Netzwerkunterstützungsdienst, der ereigniskoordinierten Uplink-Netzwerkunterstützungsdaten an die elektronische Vorrichtung,
wobei die ereigniskoordinierten Uplink-Netzwerkunterstützungsdaten umfassen:
einen Befehl, die Datenstreamingsitzung während des Zeitsegments anzuhalten; oder
einen Befehl, eine minderwertige Version des Datensegments während des Zeitsegments zu übertragen, und wobei die Anforderung an die elektronische Vorrichtung für das gespeicherte Datensegment, das dem Zeitsegment entspricht, eine Anforderung für eine hochwertige Version des Datensegments ist;
Bestimmen, durch den Netzwerkunterstützungsdienst, dass die Netzwerkressourcen für die elektronische Vorrichtung nicht ausreichend sind, um das Datensegment während des Zeitsegments zu übertragen;
Bestimmen, durch den Netzwerkunterstützungsdienst, dass die Netzwerkressourcen für die elektronische Vorrichtung ausreichend sind, um das Datensegment zu einer Zeit nach dem Zeitsegment zu übertragen, wobei die Anforderung an die elektronische Vorrichtung für das gespeicherte Datensegment als Reaktion auf das Bestimmen, dass die Netzwerkressourcen ausreichend sind, übertragen wird;
Übertragen, durch den Netzwerkunterstützungsdienst, einer Abfrage an die elektronische Vorrichtung, wobei die Abfrage eine Bestätigung anfordert, ob das gespeicherte Datensegment von der elektronischen Vorrichtung verfügbar ist; und
Empfangen, durch den Netzwerkunterstützungsdienst, einer Quittierung von der elektronischen Vorrichtung als Reaktion auf die Abfrage, wobei die Quittierung bestätigt, dass das gespeicherte Datensegment verfügbar ist, und die Anforderung für das gespeicherte Datensegment als Reaktion auf das Empfangen der Quittierung übertragen wird.

5. Verfahren nach Anspruch 4, wobei der Netzwerkunterstützungsdienst durch ein DASH-bewusstes Netzwerkelement (DANE) (42) oder ein Framework für Live-Uplink-Streaming (FLUS) gehostet wird.

6. Verfahren nach einem der Ansprüche 4 bis 5, wobei der Netzwerkunterstützungsdienst in einer Basisstation (30) implementiert oder mit dieser verbunden ist.

7. Netzwerkelement (42), das einen Netzwerkunterstützungsdienst hostet, umfassend eine Netzwerkschnittstelle (52) und eine Steuerschaltung (44), das konfiguriert ist, um das Verfahren nach einem der Ansprüche 4 bis 6 auszuführen.

8. Verfahren zum Produzieren einer kombinierten Medienproduktion, umfassend:
Empfangen, durch einen Medienproduktionsdienst, von Datensegmenten von jeder von vielfachen elektronischen Vorrichtungen, die an einer ereigniskoordinierten Uplink-Streamingsitzung, die sich auf ein Ereignis bezieht, teilnehmen, wobei das eine oder die mehreren Datensegmente einem oder mehreren Zeitsegmenten während des Ereignisses entsprechen und das Ereignis eine Livesituation ist, für die die Vielzahl von elektronischen Vorrichtungen registriert sind und von der die Vielzahl von elektronischen Vorrichtungen jeweilige Uplink-Medienströme gleichzeitig produzieren und an einen Medienproduktionsdienst übertragen;
Anfordern, durch den Medienproduktionsdienst, eines gespeicherten Datensegments von einer der Vielzahl von elektronischen Vorrichtungen, wobei das gespeicherte Datensegment einem Zeitsegment des einen oder der mehreren Zeitsegmente entspricht;
Empfangen, durch den Medienproduktionsdienst, des gespeicherten Datensegments von der elektronischen Vorrichtung; und
Erstellen, durch den Medienproduktionsdienst, der kombinierten Medienproduktion durch Einfügen des gespeicherten Datensegments in die kombinierte Medienproduktion an dem Zeitsegment,
**dadurch gekennzeichnet, dass** die eine der Vielzahl von elektronischen Vorrichtungen (14):
ereigniskoordinierte Uplink-Netzwerkunterstützungsdaten von einem Netzwerkunterstützungsdienst, die sich auf das Zeitsegment während des Ereignisses beziehen, empfängt;
die Datenstreamingsitzung anhält oder eine minderwertige Version des Datensegments während des Zeitsegments basierend auf den ereigniskoordinierten Uplink-Netzwerkunterstützungsdaten überträgt;
eine Abfrage von dem Netzwerkunterstützungsdienst empfängt, wobei die Abfrage eine Bestätigung anfordert, ob das gespeicherte Datensegment verfügbar ist; und
eine Quittierung an den Netzwerkunterstützungsdienst als Reaktion auf das Empfangen der Abfrage überträgt, um zu bestätigen, dass das gespeicherte Datensegment verfügbar ist.

## Revendications

1. Procédé de fourniture de données d'un dispositif électronique (14) à un service de production multimédia dans un réseau, comprenant :
l'enregistrement, par le dispositif électronique (14), d'une session de diffusion de données en continu de liaison montante pour un événement, la session de diffusion de données en continu comprenant plusieurs segments de données et l'événement étant une situation en direct au cours de laquelle la pluralité de dispositifs électroniques enregistrés pour l'événement produisent et transmettent simultanément des flux multimédia de liaison montante respectifs au service de production multimédia ;
le stockage, par le dispositif électronique (14), d'une version de haute qualité d'un segment de données de la pluralité de segments de données dans une mémoire locale, le segment de données correspondant à un segment temporel pendant l'événement ;
la réception, par le dispositif électronique (14), d'une demande de transmission du segment de données stockées ;
la transmission, par le dispositif électronique (14), du segment de données stockées au service de production multimédia en réponse à la réception de la demande ;
la réception, par le dispositif électronique (14), de données d'assistance au réseau de liaison montante coordonnées à un événement, provenant d'un service d'assistance au réseau, **caractérisé en ce que** les données d'assistance au réseau de liaison montante coordonnées à un événement se rapportent au segment temporel pendant l'événement ;
l'interruption, par le dispositif électronique (14), de la session de diffusion des données en continu pendant le segment temporel ou la transmission, par le dispositif électronique (14), d'une version de faible qualité du segment de données pendant le segment temporel, sur la base des données d'assistance au réseau de liaison montante coordonnées à un événement ;
la réception, par le dispositif électronique (14), d'une requête provenant du service d'assistance au réseau, la requête demandant une confirmation de la disponibilité de la version de haute qualité du segment de données stockées ; et
la transmission, par le dispositif électronique (14), d'un accusé de réception au service d'assistance au réseau en réponse à la réception de la requête de confirmation de la disponibilité de la version de haute qualité du segment de données stockées.

2. Procédé selon la revendication 1, dans lequel le service d'assistance au réseau est mis en oeuvre dans une station de base (30) ou connecté à celle-ci.

3. Dispositif électronique comprenant une interface sans fil (18) et un circuit de commande (32) configuré pour réaliser le procédé selon l'une quelconque des revendications 1 à 2.

4. Procédé de fourniture d'une assistance au réseau de liaison montante coordonnée à un événement par un service d'assistance au réseau à une pluralité de dispositifs électroniques dans un réseau pendant un événement, l'événement étant une situation en direct à laquelle la pluralité de dispositifs électroniques sont enregistrés et à partir de laquelle la pluralité de dispositifs électroniques produisent et transmettent simultanément des flux multimédia de liaison montante respectifs à un service de production multimédia, comprenant :
la réception, par le service d'assistance au réseau, d'une demande d'enregistrement provenant d'un appareil électronique de la pluralité d'appareils électroniques pour une session de diffusion de données en continu correspondant à l'événement, la session de diffusion de données en continu comprenant une pluralité de segments de données ;
la transmission, par le service d'assistance au réseau, d'une demande au dispositif électronique pour un segment de données stocké de la pluralité de segments de données, le segment de données stockées correspondant à un segment temporel pendant l'événement ;
la détermination, par le service d'assistance au réseau, de données d'assistance au réseau de liaison montante coordonnées à un événement se rapportant au segment temporel pendant l'événement, les données d'assistance au réseau de liaison montante coordonnées à un événement étant au moins partiellement basées sur les ressources réseau disponibles pour la pluralité de sessions de diffusion de données en continu pendant le segment temporel ;
la transmission, par le service d'assistance au réseau, des données d'assistance au réseau de liaison montante coordonnées à un événement au dispositif électronique,
dans lequel les données d'assistance au réseau de liaison montante coordonnées à un événement comprennent :
un ordre permettant d'interrompre la session de diffusion de données en continu pendant le segment temporel ; ou
un ordre de transmission d'une version de faible qualité du segment de données pendant le segment temporel, et la demande au dispositif électronique pour que le segment de données stockées correspondant au segment temporel soit une demande de version de haute qualité du segment de données ;
la détermination, par le service d'assistance au réseau, du fait que les ressources réseau sont insuffisantes pour que l'appareil électronique puisse transmettre le segment de données pendant le segment temporel ;
la détermination, par le service d'assistance au réseau, du fait que les ressources réseau sont suffisantes pour que le dispositif électronique transmette le segment de données à un moment ultérieur au segment temporel, la demande de segment de données stockées étant transmise au dispositif électronique en réponse à la détermination du fait que les ressources réseau sont suffisantes ;
la transmission, par le service d'assistance au réseau, d'une requête au dispositif électronique, la requête demandant une confirmation de la disponibilité du segment de données stockées à partir du dispositif électronique ; et
la réception, par le service d'assistance au réseau, d'un accusé de réception provenant de l'appareil électronique en réponse à la requête, l'accusé de réception confirmant que le segment de données stockées est disponible, et la demande du segment de données stockées est transmise en réponse à la réception de l'accusé de réception.

5. Procédé selon la revendication 4, dans lequel le service d'assistance au réseau est hébergé par un élément de réseau sensible à DASH (DANE) (42) ou un cadre pour une diffusion de liaison montante en direct (FLUS).

6. Procédé selon l'une des revendications 4 à 5, dans lequel le service d'assistance au réseau est mis en oeuvre dans une station de base (30) ou connecté à celle-ci.

7. Élément de réseau (42) qui héberge un service d'assistance au réseau, comprenant une interface réseau (52) et un circuit de commande (44) configuré pour réaliser le procédé selon l'une quelconque des revendications 4 à 6.

8. Procédé de production multimédia combiné, comprenant :
la réception, par un service de production multimédia, de segments de données provenant de chacun des dispositifs électroniques participant à une session de diffusion de liaison montante en continu coordonnée à un événement se rapportant à un événement, le ou les segments de données correspondant à un ou plusieurs segments temporels pendant l'événement et l'événement étant une situation en direct à laquelle la pluralité de dispositifs électroniques sont enregistrés et à partir de laquelle la pluralité de dispositifs électroniques produisent et transmettent simultanément des flux multimédia de liaison montante respectifs à un service de production multimédia ;
la demande, par le service de production multimédia, d'un segment de données stockées parmi l'un des multiples dispositifs électroniques, le segment de données stockées correspondant à un segment temporel parmi le ou les segments temporels ;
la réception, par le service de production multimédia, du segment de données stockées provenant de l'appareil électronique ; et
la création, par le service de production multimédia, de la production multimédia combinée en insérant le segment de données stockées dans la production multimédia combinée au segment temporel, **caractérisé en ce que** l'un de la pluralité de dispositifs électroniques (14) :
reçoit d'un service d'assistance au réseau des données d'assistance au réseau de liaison montante coordonnées à un événement et se rapportant au segment temporel pendant l'événement ;
interrompt la session de diffusion des données en continu ou transmet une version de faible qualité du segment de données pendant le segment temporel sur la base des données d'assistance au réseau de liaison montante coordonnées à un événement ;
reçoit une requête du service d'assistance au réseau, la requête demandant une confirmation de la disponibilité du segment de données stockées ; et
transmet un accusé de réception au service d'assistance au réseau en réponse à la réception de la demande de confirmation de la disponibilité du segment de données stockées.
